# EUROPÄISCHE PATENTANMELDUNG

(11) **EP 0 527 325 A1**
(43) Veröffentlichungstag der Anmeldung: **17.02.1993**
(21) Anmeldenummer: 92111389.0
(22) Anmeldetag: 04.07.1992
(51) Int. Cl.: G01D 13/06

(54) **Vorrichtung zur Anzeige der Drehstellung eines Drehkörpers**

(30) Priorität: 07.08.1991 DE 9109792 U
(71) Anmelder: Preh-Werke GmbH & Co. KG, 97616 Bad Neustadt (DE)
(72) Erfinder: Bauer, Karl-Heinz, W-8740 Bad Neustadt/Saale (DE)

(57) **Zusammenfassung**

Um für Drehbereiche oberhalb 180° eine flächige Anzeige von Drehstellungen durch ein Fenster einer Sichtblende hindurch zu ermöglichen, wird für das Fenster eine spiralförmige Anordnung vorgeschlagen.

## Beschreibung

Die Erfindung betrifft eine Vorrichtung zur Anzeige der Drehstellung eines Drehkörpers mit einer stationär gehaltenen Sichtblende, die ein zur Drehachse des Drehkörpers ausgerichtetes, bogenförmiges Fenster enthält und mit einer der Sichtblende zugeordneten, sich mit dem Drehkörper um die Drehachse drehbewegenden Scheibe, die eine Markierung zur Anzeige der jeweiligen Drehstellung aufweist, wobei die Markierung durch das Fenster hindurch einsehbar ist und wobei der Öffnungswinkel des Fensters dem Drehbereich des Drehkörpers entspricht.

Vergleichbare Vorrichtungen sind oftmals im Zusammenhang mit Drehstellern, z.B. an Haushaltsgeräten oder in Fahrzeugen, anzutreffen. Häufig ist der Drehsteller selbst mit einer Marke ausgestattet, die seine jeweilige Drehposition anzeigt. In solchen Fällen trägt die Sichtblende regelmäßig auf die Marke ausgerichtete Symbole oder eine Skala.

Aus Gründen der Formgestaltung oder bei fehlendem Drehsteller ist die Drehstellungsanzeige mitunter auch hinter der Sichtblende, nämlich auf dem eine Welle, ein Stellglied oder dergleichen darstellenden Drehkörper selbst, oder auf einer mit dem Drehkörper verbundenen Scheibe angeordnet. Die Drehstellungsanzeige ist dann durch ein Fenster der Sichtblende hindurch einsehbar. Entspricht in solch einer Vorrichtung der Öffnungswinkel des Fensters dem auf eine Teilumdrehung begrenzten Drehbereich, so kann die jeweilige Drehstellung auch durch einen, z.B. auf die Scheibe aufgebrachten, farblich kontrastierenden Ringabschnitt angezeigt sein. Dabei entspricht die Bogenlänge des Ringabschnittes ebenfalls dem Drehbereich. Bei Anschlag am Ende des Drehbereiches ist im Fenster dann nur die Farbe des Ringabschnittes zu sehen. Bei Anschlag am gegenüberliegenden Ende des Drehbereiches ist der Ringabschnitt unsichtbar. Im Drehbereich wird eine jeweilige Drehstellung ähnlich der Temperaturanzeige in einem Thermometer durch das Ende des sichtbaren Ringabschnittes angezeigt.

Bei der vorstehend beschriebenen Anzeigevorrichtung ist die einer Thermometeranzeige ähnliche Darstellung einer Drehposition mit einfachen Mitteln, wie z.B. eine Scheibe, allerdings nur bis zu einem maximalen Drehbereich von 180° zu verwirklichen. Bei 180° übersteigendem Drehbereich ist ein entsprechender Ringabschnitt nicht mehr vollständig aus der Fensterfläche der Sichtblende herauszudrehen. Um für 180° übersteigende Drehbereiche eine vergleichbare Anzeige zu verwirklichen, etwa gemäß den Anregungen der DE-OS-33 17 807, ist zusätzlicher Aufwand und mehr Platz erforderlich.

Es ist deshalb Aufgabe der Erfindung für die eingangs bezeichnete Vorrichtung eine Lösung vorzuschlagen, die eine der Thermometeranzeige ähnliche Anzeige von Drehstellungen auch oberhalb eines Drehbereiches von 180° ohne zusätzlichen Aufwand ermöglicht. Die Aufgabe wird in vorteilhafter Weise durch die kennzeichnenden Merkmale des Anspruches 1 gelöst. Die Merkmale der weiteren Ansprüche bilden den Erfindungsgegenstand vorteilhaft weiter.

Bei der erfindungsgemäßen Anzeigevorrichtung ändert sich der radiale Abstand des Fensterausschnittes zur Drehachse kontinuierlich und gegenläufig zu den Fensterenden hin. Ein einer solchen Anordnung des Fensters angepaßter, mit der Scheibe um die Drehachse verdrehlicher Ringabschnitt vermag dadurch mit seinem verdeckten Abschnittsende das gegenüberliegende Fensterende mit einer gewissen Länge rückwärts zu überfahren, ohne sichtbar zu werden. Dies ermöglicht in vorteilhafter Weise eine thermometerähnliche Anzeige von Drehstellungen auch für Drehbereiche über 180° ohne zusätzlichen Aufwand bzw. Raumbedarf. Die Erfindung ist auf Drehbereiche anwendbar bis etwa 300°. Maßgebend für die Anwendungsgrenze ist die radiale Fensterbreite und der spirale Hub des Fensters.

Wählt man für die Scheibe und den farbigen Ringabschnitt eine lichttransparente Ausführung, so wird man, wenn die Anordnung hinterleuchtet ist, auch bei Dunkelheit den Drehbereich und die Drehstellung im Drehbereich erkennen können. Vorteilhaft ist eine solche Vorrichtung in sogenanntem 'Nachtdesign' beispielsweise in Kraftfahrzeugen im Zusammenhang mit Bedieneinrichtungen, z.B. für Lüftungs- bzw. Klimaanlagen. In solchen Fällen ist die Kenntnis der exakten Winkelstellung nicht interessant. Vielmehr will man den Grad der Verstellung bezogen auf den gesamten Drehbereich schnell erfassen können.

Anhand von Darstellungen werden einige Ausführungsbeispiele der Erfindung näher beschrieben. Es zeigen:
- Figur 1: einen schematisch dargestellten Aufbau einer Anzeigevorrichtung in Seitenansicht mit Drehknopf,
- Figur 2: einen Ausschnitt der Sichtblende nach Figur 1 mit Fenster in Draufsicht,
- Figur 3: eine Draufsicht auf eine Scheibe der Anzeigevorrichtung nach Figur 1 mit Ringabschnitt
und
- Figur 4: eine Draufsicht auf eine Scheibe gemäß Figur 3 mit zwei Ringabschnitten.

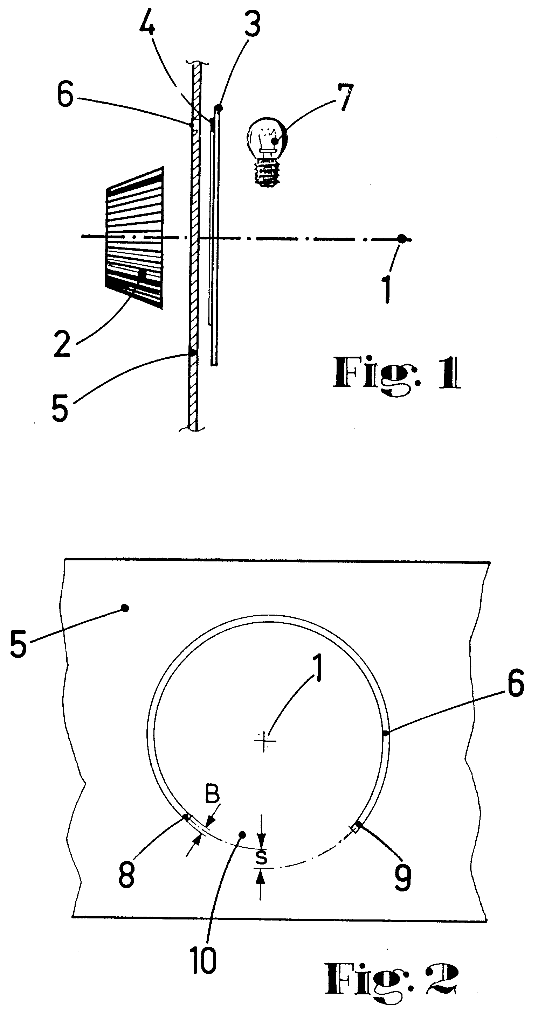

Durch das in Figur 1 dargestellte Schema ist der grundsätzliche Aufbau einer artgemäßen Anzeigevorrichtung erkennbar. Dabei dreht sich ein nicht dargestellter Drehkörper um seine Drehachse (1). Mit der Drehachse (1) verbunden ist ein Drehknopf (2), dessen Handhabung den Drehkörper um die Drehachse (1) dreht. Mit der Drehachse starr verbunden ist weiterhin eine Scheibe (3), die auf ihrer Scheibenfläche eine Markierung (4) zur Kenntlichmachung der Drehstellung trägt. Zwischen der Scheibe (3) und dem Drehknopf (2) befindet sich eine stationär gehaltene, der Scheibe (3) zugeordnete Sichtblende (5). Die Sichtblende (5) kann beispielsweise Teil eines Gehäuses sein. In der Sichtblende (5) ist ein auf die Markierung (4) der Scheibe (3) ausgerichtetes Fenster (6) ausgebildet. Im Fenster (6) ist die Markierung (4) und somit die Drehstellung sichtbar. Eine Lichtquelle (7) durchscheint bedarfsweise Scheibe (3) und Markierung (4) und leuchtet die Fläche des Fensters (6) aus. Die Sichtblende (5) ist mit Ausnahme des Fensters (6) nicht transparent. Die Scheibe (3) kann z.B. aus Metall oder Kunststoff gefertigt und eingefärbt sein, sie ist entweder ein separat anzufertigendes Teil oder Bestandteil des oben erwähnten Drehkörpers. Die Markierung (4) wird in aller Regel zur Farbe der Scheibe (3) kontrastieren. In Figur 1 sind Scheibe (3) und Markierung (4) lichtdurchlässig ausgebildet; die Scheibe (3) besteht beispielsweise aus einer transluzenten, mit der Markierung beschichteten, z.B. bedruckten, Kunststoff-Folie.

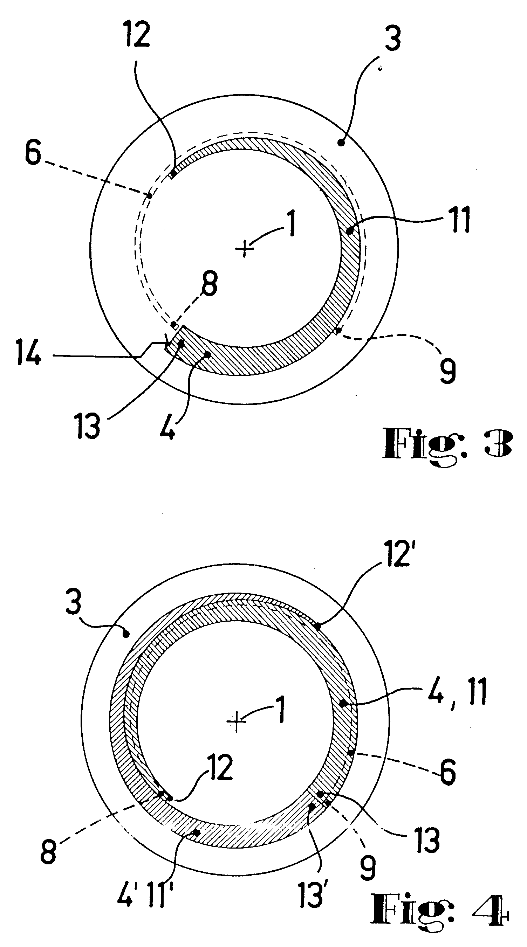

Der Abstand des Fensters zur Drehachse vergrößert sich von einem ersten Fensterende (8), das einer ersten Endstellung der Drehung entspricht, bis hin zum gegenüberliegenden, zweiten Fensterende (9), das einer der ersten Endstellung gegenüberliegenden, zweiten Endstellung der Drehung entspricht, spiralförmig. Zwischen den Radien der beiden Fensterenden (8, 9) ergibt sich eine als spiraler Hub **S** bezeichnete Differenz. In Figur 2 stellt sich der spirale Hub **S** in Rechtsdrehung gesehen zunehmend bzw. in Linksdrehung gesehen abnehmend dar; diese Verhältnisse lassen sich im Prinzip auch umkehren. Um die Drehstellungsanzeige mit der Vorrichtung über 180° hinaus verwirklichen zu können, ist es erforderlich, daß der Teilhub von **S**, der sich aus einer dem Bogen (10) der Sichtblende (5) zwischen den Fensterenden (8, 9) entsprechenden Bogenlänge ergibt, mindestens der radialen Fensterbreite **B** entspricht.

In Figur 3 ist eine Scheibe (3) dargestellt mit einer Markierung (4) für die Drehstellungsanzeige. Die beispielsweise auf einem weißen Untergrund der Scheibe (3) in rot aufgebrachte Markierung (4) verläuft im wesentlichen konzentrisch zur Drehachse. Diese Markierung (4) stellt einen Abschnitt (11) eines Kreisringes dar, mit einem schmalen ersten Abschnittsende (12) und einem breiten zweiten Abschnittsende (13). Die Breite des schmalen Abschnittsendes (12) entspricht in etwa der Fensterbreite **B**. Das entgegengesetzt liegende, zweite Abschnittsende (13) hat eine Breite, die der Fensterbreite **B** und dem zugewachsenem spiralen Hub **S** entspricht. Zwischen den Abschnittsenden (12, 13) vergrößert bzw. verkleinert sich die radiale Breite der Markierung (4) kontinuierlich. Die Bogenlänge der Markierung (4) entspricht ebenso wie die des Fensters (6) dem Drehbereich. Die Stirnseite des breiten Abschnittsendes (13) bezeichnet die jeweilige Drehstellung. Bezogen auf die Darstellung des Fensters (6) in Figur 2 befindet sich die Scheibe (3) mit der Markierung (4) in Anschlagstellung an einem Fensterende (8). Die z.B. rotfarbene Markierung ist im Fenster (6), dessen Position in der Darstellung gestrichelt wiedergegeben ist, dann unsichtbar. Bei rechtsdrehendem Drehkörper wird das breite Abschnittsende (13) sichtbar und markiert mit seiner Stirnseite (14) die Drehstellung. Mit Fortsetzung der Rechtsdrehung erfolgt der Anschlag am gegenüberliegenden zweiten Fensterende (9) und die rote Markierung füllt die Fensterfläche völlig. In Figur 4 ist die Markierung (4) bei Rechtsanschlag dargestellt.

Die Markierung (4) ist in Figur 4 durch eine weitere Markierung (4') in z.B. blauer Farbe ergänzt. Die beiden Markierungen (4, 4'), die gemeinsam nahezu einen Kreisring bilden, sind hinsichtlich ihrer radialen Breite gegenläufig. Die jeweils breiten Abschnittsenden (13, 13') stoßen aneinander; die schmalen Abschnittsenden (12, 12') sind gegenläufig, entsprechend dem Drehbereich versetzt. Auch die zweite Markierung (4') ist nur insoweit erkennbar, soweit sie in das Fenster eingedreht ist.

### Bezugszeichenliste zu 05/91 EUR

- 1: Drehachse
- 2: Drehknopf
- 3: Scheibe
- 4, 4': Markierung
- 5: Sichtblende
- 6: Fenster
- 7: Lichtquelle
- 8: Fensterende erstes
- 9: Fensterende zweites
- 10: Bogen
- 11, 11': Ringabschnitt
- 12, 12': Abschnittsende schmal
- 13, 13': Abschnittsende breit
- 14: Stirnseite
- **B**: Fensterbreite
- **S**: Hub

## Patentansprüche

1. Vorrichtung zur Anzeige der Drehstellung eines Drehkörpers mit einer stationär gehaltenen Sichtblende, die ein zur Drehachse des Drehkörpers ausgerichtetes, bogenförmiges Fenster enthält und mit einer der Sichtblende zugeordneten, sich mit dem Drehkörper um die Drehachse drehbewegenden Scheibe, die eine Markierung zur Anzeige der jeweiligen Drehstellung aufweist, wobei die Markierung durch das Fenster hindurch einsehbar ist und wobei der Öffnungswinkel des Fensters dem Drehbereich des Drehkörpers entspricht,
dadurch gekennzeichnet,
daß sich der Abstand zwischen dem Fenster (6) und der Drehachse (1) innerhalb des Drehbereiches von einer ersten Endstellung (8) aus betrachtet bis zur zweiten Endstellung (9) spiralförmig um einen Hub **S** vergrößert, und daß die Markierung (4, 4') aus einem dem Drehbereich entsprechenden Abschnitt (11, 11') eines Farbringes besteht, der im wesentlichen konzentrisch zur Drehachse (1) verläuft, mit einem schmaleren ersten Abschnittsende (12, 12'), dessen Breite in etwa der Breite (**B**) des Fensters (6) entspricht, und mit einem um den spiralen Hub (**S**) des Fensters (6) verbreiterten zweiten Abschnittsende (13, 13'), wobei die jeweilige Drehstellung durch die Stirnseite (14) des verbreiterten zweiten Abschnittsendes (13, 13') einer Thermometeranzeige vergleichbar angezeigt ist.

2. Vorrichtung nach Anspruch 1,
dadurch gekennzeichnet,
daß die gemäß dem spiralförmigen Verlauf des Fensters (6) zunehmende Verbreiterung des Farbringabschnittes (11, 11') sich radial nach innen erstreckt.

3. Vorrichtung nach Anspruch 1,
dadurch gekennzeichnet,
daß die gemäß dem spiralförmigen Verlauf des Fensters (6) zunehmende Verbreiterung des Farbringabschnittes (11, 11') sich radial nach außen erstreckt.

4. Vorrichtung nach einem der Ansprüche 1 bis 3,
dadurch gekenzeichnet,
daß die Farbe der Scheibe (3) zur Farbmarkierung kontrastiert.

5. Vorrichtung nach einem der Ansprüche 1 bis 4,
dadurch gekennzeichnet,
daß der Farbringabschnitt (11, 11') durch eine weitere Farbe zu einem Kreisring vervollständigt ist.

6. Vorrichtung nach einem der Ansprüche 1 bis 5,
dadurch gekennzeichnet,
daß die Farbmarkierung (4, 4') und die Scheibe (3) lichtdurchlässig sind.
